# EUROPÄISCHE PATENTSCHRIFT

(11) **EP 0 345 203 B1**
(45) Veröffentlichungstag und Bekanntmachung des Hinweises auf die Patenterteilung: **10.02.1993**
(21) Anmeldenummer: 89710020.2
(22) Anmeldetag: 31.03.1989
(51) Int. Cl.: B60T 8/88, B60T 13/68, B60T 17/22

(54) **Elektronisch geregelte Druckmittel-Bremseinrichtung**
Electronically regulated pressure means brake installation
Installation de freinage avec moyen de pression régulé électroniquement

(30) Priorität: 01.06.1988 DE 3818617
(43) Veröffentlichungstag der Anmeldung: 06.12.1989
(73) Patentinhaber: DAIMLER-BENZ AKTIENGESELLSCHAFT, 70327 Stuttgart (DE)
(72) Erfinder: Klein, Bodo, Dipl.-Ing., D-7302 Ostfildern 2 (DE)

(56) Entgegenhaltungen:
- EP-A- 0 265 623
- DE-A- 3 230 970
- GB-A- 2 170 286

## Beschreibung

Die Erfindung betrifft eine elektronisch geregelte Druckmittel-Bremseinrichtung gemäß dem Oberbegriff des Patentanspruches 1.

Es ist eine gattungsgemäße Bremseinrichtung bekannt (DE-OS 32 30 970), bei welcher vor dem Radbremszylinder oder den Radbremszylindern ein 2-Wege-Rückschlagventil angeordnet ist, welches beim Bremsen und bei intakter elektrischer/elektronischer Einrichtung in seiner einen Endstellung eine Verbindung zum Hauptbremskreis und bei Störungen in der Ansteuerung des im Hauptbremskreis liegenden Elektromagnetventils in seiner anderen Endstellung eine Verbindung zum Nebenbremskreis für eine Notbremsfunktion hergestellt. Ebenso wie bei einer weiters bekannten Bremseinrichtung (DE-OS 36 17 356), bei welcher die Radbremszylinder über einen Haupt- und Nebenbremskreis ausschließlich von Elektromagnetventilen angesteuert werden, kann jedoch der Fall auftreten, daß bei einem Defekt in den Komponenten der Regeleinrichtung oder deren Steuerleitungen, z.B. durch fehlerhafte Steuerbefehle, die Elektromagnetventile im Haupt- und Nebenbremskreis beide Bremskreise absperren und damit ein Bremsversagen auftritt.

Aufgabe der Erfindung ist es, die gattungsgemäße Bremseinrichtung dahingehend zu verbessern, daß eine Bremsung nicht nur dann noch möglich ist, wenn die Elektrik/Elektronik ausfällt, sondern auch dann, wenn Defekte in Komponenten derselben oder deren Steuerleitungen auftreten.

Diese Aufgabe wird erfindungsgemäß mit den kennzeichnenden Merkmalen des Anspruches 1 gelöst, wobei die Merkmale der Unteransprüche vorteilhafte Aus- und Weiterbildungen des Erfindungsgegenstandes kennzeichnen.

Danach ist vor dem Radbremszylinder ein vom Bremsmitteldruck im Hauptbremskreis vorsteuerbares 3/2-Wegeventil vorgesehen, welches in seine Arbeitsstellung geht und dadurch den Radbremszylinder mit dem elektronisch geregelten Hauptbremskreis verbindet, sobald im Hauptbremskreis ein vorgegebener Druckwert überschritten ist. Die Umschaltung kann in vorteilhafter Abwandlung der Erfindung auch erfolgen, solange ein bestimmtes Verhältnis der Bremsmitteldrücke zwischen Haupt- und Nebenbremskreis nicht überschritten ist. Der Vorteil einer derartigen Bremseinrichtung ist eine schnell ansprechende Bremse, die von normalem Bremsen stufenlos in Antiblockierregelung übergehen kann und sowohl bei Totalausfall als auch bei anderen Defekten der elektronischen Regeleinrichtung durch die als Not- oder Hilfsbremssystem wirkende konventionelle Bremsanlage ersetzbar ist.

Weitere Einzelheiten der Erfindung sind einem nachfolgend beschriebenen Ausfuhrungsbeispiel zu entnehmen.

In der Zeichnung zeigen:
Figur 1 ein schematisches Schaltbild der Erfindung für einen Radbremszylinder und
Figur 1a bis die Einzelheit WV gemäß Figur 1 in diversen
Figur 1c Modifikationen,
Figur 2 ein schematisches Schaltbild für eine komplette Fahrzeug-Bremsanlage.

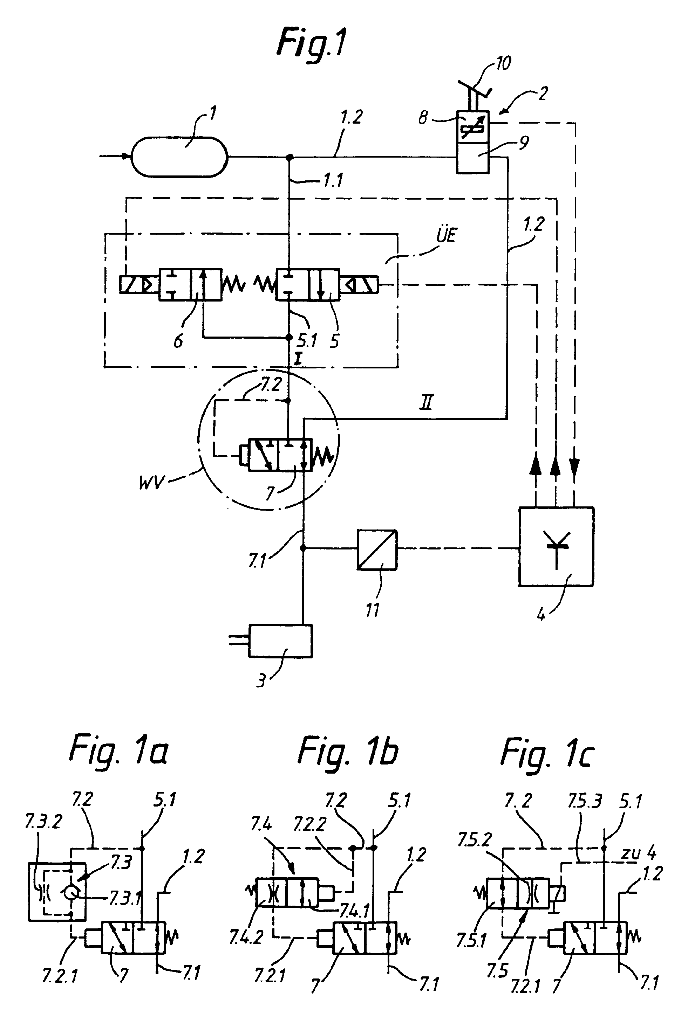

Figur 1 zeigt ein schematisches Schaltbild einer elektronisch geregelten Druckmittel-Bremseinrichtung für ein Kraftfahrzeug, welche mit Druckluft als Druckmittel arbeitet und der Anschaulichkeit wegen lediglich aus einem Bremskreis mit einem Radbremszylinder besteht.

Als Druckmittelquelle ist ein Druckluft-Vorratsbehälter 1 vorgesehen, der auf nicht dargestellte Weise mit Druckluft versorgt wird. Von diesem Vorratsbehälter 1 führt eine Druckleitung 1.1 zu einem als Einlaßventil 5 wirkenden Elektromagnetventil, welches von einer elektronischen Regeleinrichtung 4 angesteuert wird. Sämtliche Steuerleitungen in Fig. 1 sind strichliert dargestellt. Vom Einlaßventil 5 führt eine Druckleitung 5.1 zu einem 3/2-Wegeventil 7 und zu einem als Auslaßventil 6 wirkenden weiteren Elektromagnetventil, welches ebenfalls von der elektronischen Regeleinrichtung 4 angesteuert wird. Vom 3/2-Wegeventil 7 führt eine weitere Druckleitung 7.1 zu dem Radbremszylinder 3 des zu bremsenden Rades. Die vorstehend beschriebene Druckluftführung vom Vorratsbehalter 1 über das Einlaßventil 5 zum 3/2-Wegeventil 7 wird als Hauptbremskreis I bezeichnet.

Vom Vorratsbehälter 1 führt eine weitere Druckleitung 1.2 zu einem Betriebsbremsventil 9 eines Bremswertgebers 2 und von diesem zu einem weiteren Anschluß des 3/2-Wegeventils 7. Diese Druckluftführung wird als Nebenbremskreis II bezeichnet.

Der Bremswertgeber 2 weist neben dem bereits genannten Betriebsbremsventil 9 einen Sollwertgeber 8 auf. Beide Einheiten werden von einem Bremspedal 10 betätigt, wobei ein der Pedalbetätigung proportionaler Sollwert als elektrisches Signal der elektronischen Regeleinrichtung 4 zugeführt wird, ebenso wie ein dem Druck im Radbremszylinder 3 proportionales Signal, welches über einen diesen Druck aufnehmenden und in ein elektrisches Signal wandelnden Drucksensor 11 gewonnen wird.

Die Elektromagnetventile 5 und 6 sowie das 3/2-Wegeventil sind in ihrer Ruhestellung dargestellt, welche sie einnehmen, wenn an den Ventilen 5 und 6 kein Steuersignal anliegt bzw. am 3/2-Wegeventil 7 kein Druck über die Vorsteuerleitung 7.2 ansteht.
Das 3/2-Wegeventil ist so ausgebildet, daß es in Arbeitsstellung geht, sobald im Hauptbremskreis I ein Druck von z.B. mindestens 0,2 bar anliegt. Dies ist etwa der Wert, der bei einer geregelten Bremsung auf Glatteis dem Radbremszylinder noch zugeführt werden kann.

Das Einlaßventil 5 ist also in Ruhestellung gesperrt, das Auslaßventil 6 geöffnet und das Wegeventil 7 so geschaltet, daß es den Radbremszylinder 3 mit dem Nebenbremskreis II verbindet.
Diese Ventilstellungen liegen vor, wenn das Bremspedal 10 nicht betätigt ist.

Bei Betätigung des Bremspedals 10 wird vom Sollwertgeber 8 ein Sollwert an die Regeleinrichtung 4 gemeldet. Diese sendet Steuersignale aus, durch welche das Auslaßventil 6 geschlossen und das Einlaßventil 5 geöffnet wird, wodurch Druckluft vom Vorratsbehälter 1 zum 3/2-Wegeventil 7 gelangt. Sobald der sich vor dem Wegeventil aufbauende Druck den vorgegebenen Wert von z.B. 0,2 bar überschreitet, geht das Wegeventil in Arbeitsstellung, wodurch der Radbremszylinder 3 mit Druckluft aus dem Hauptbremskreis I beaufschlagt wird und die Bremswirkung einsetzt. Erreicht der Druck-Istwert den Sollwert, wird das Einlaßventil 5 geschlossen und der Druck damit gehalten, sofern das Bremspedal mittlerweile keinen anderen Wert vorgibt oder eine Antiblockierregelung einsetzt, um das Rad vor dem Blockieren zu schützen. Mit dem Einlaß- und dem Auslaßventil kann der Druck im Radbremszylinder 3 in an sich bekannter Weise beliebig aufgebaut, gehalten und wieder abgesenkt werden. Die Steuerbefehle dazu werden in an sich bekannter Weise in der elektronischen Regeleinrichtung - beispielsweise einer ABS- und/oder ASR- und/oder ALB-Regeleinrichtung - erzeugt, was hier nicht dargestellt ist.

Infolge der Ausbildung der Elektromagnetventile als Membranventile ist nicht damit zu rechnen, daß diese in ihrer Arbeitsstellung blockieren. Es ist demnach lediglich zu beachten, daß sie bei möglichen Defekten der elektronischen Regeleinrichtung (falsche Steuerbefehle) oder der Steuerleitungen (Leitungsbruch) in ihrer Arbeits- oder Ruhestellung verharren. Wenn das Einlaßventil 5 nicht öffnet, sobald das Bremspedal 10 betätigt wird, bleibt auch das 3/2-Wegeventil 7 in seiner Ruhestellung und es kann normal über das Betriebsbremsventil 9 und den Nebenbremskreis II gebremst werden. Dies ist auch dann der Fall, wenn das Auslaßventil 6 nicht schließt, da dann im Hauptbremskreis I kein Druck entsteht und das 3/2-Wegeventil 7 ebenfalls in Ruhestellung verbleibt. Der Druckverlauf infolge Ventilansteuerung wird von der elektronischen Regeleinrichtung über den Drucksensor 11 überwacht. Im Falle eines Defekts wird die elektronische Regeleinrichtung abgeschaltet und dem Fahrer ein diesbezügliches Anzeigesignal übermittelt. Die Betriebsbremse (Bremspedal 10, Betriebsbremsventil 9, Nebenbremskreis II, 3/2-Wegeventil 7, Radbremszylinder 3) bleibt jedoch voll funktionsfähig.

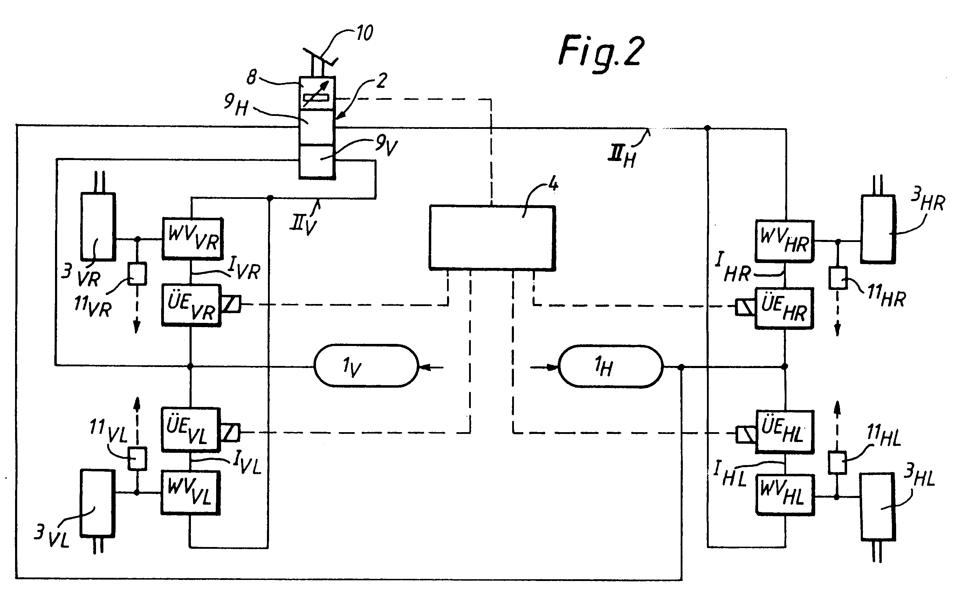

In Figur 2 ist schematisch ein Bremssystem nach Figur 1 für ein Nutzfahrzeug mit zwei Achsen und zwei Bremskreisen dargestellt. Zusätzlich zu den aus Figur 1 übernommenen Bezugszahlen sind diese mit Indices versehen, welche folgende Bedeutung haben:
- V: : vorne bzw. Vorderachse oder Vorderrad,
- H: : hinten bzw. Hinterrachse oder Hinterrad,
- L: : links, und
- R: : rechts.

Die beiden vorhandenen Bremskreise sind achsenweise aufgeteilt, d.h., ein Bremskreis ist für die Vorderräder und der andere für die Hinterräder vorgesehen. Gemeinsam für beide Bremskreise ist die elektronische Regeleinrichtung 4 und der Bremswertgeber 2 mit Sollwertgeber 8 und Bremspedal 10. Für jeden Bremskreis ist der Bremswertgeber mit einem eigenen Betriebsbremsventil - 9_{V} für den Vorderachsbremskreis und 9_{H} für den Hinterachsbremskreis - ausgerüstet. Der Einfachheit halber und um das schematische Schaltbild übersichtlicher zu machen, sind die beiden Elektromagnetventile 5 und 6, in Figur 1 strichpunktiert umrandet, zu einer gemeinsamen Übertragungseinheit ÜE zusammengefaßt und das 3/2-Wegeventil als Kasten mit der Bezeichnung WV - entsprechend der Einzelheit WV in Figur 1 - und den jeweiligen Indices für vorne, hinten, links und rechts dargestellt.

Betrachtet man nun beispielsweise den Vorderachsbremskreis, so ist in diesem Ausführungsbeispiel jedem Rad der Vorderachse eine Übertragungseinheit ÜE, eine Wegeventil WV, ein Radbremszylinder 3 und und ein Drucksensor 11 zugeordnet. Für das linke Vorderrad also die Bezugszeichen ÜE_{VL}, WV_{VL}, 3_{VL} und 11_{VL}. Desgleichen für das rechte Vorderrad ÜE_{VR}, WV_{VR}, 3_{VR} und 11_{VR}. Von einem dem Vorderachsbremskreis zugeordneten Druckluft-Vorratsbehälter 1_{V} gehen Druckluftleitungen zu den Übertragungseinheiten ÜE_{VL} und ÜE_{VR} sowie zum Betriebsbremsventil 9_{V} des Bremswertgebers 2. Jede der beiden Übertragungseinheiten ist über das zugeordnete Wegeventil (in Arbeitsstellung) mit dem entsprechenden Radbremszylinder und dem diesem zugeordneten Drucksensor verbunden, also ÜE_{VL} - WV_{VL} - 3_{VL} - 11_{VL} und ÜE_{VR} - WV_{VR} - 3_{VR} - 11_{VR}. Diese Leitungsführung entspricht den Hauptbremskreisen I_{VL} und I_{VR}. Das Betriebsbremsventil 9_{V} ist über Druckluftleitungen mit den Wegeventilen WV_{VL} und WV_{VR} verbunden, in deren Ruhestellungen der über das Betriebsbremsventil 9_{V} aufgebaute Druck in die Radbremszylinder 3_{VL} und 3_{VR} gelangen kann. Diese Leitungsführung entspricht dem für beide Räder dieses Bremskreises gemeinsamen Nebenbremskreis II_{V}.

Der vorstehend für den Vorderachsbremskreis beschriebene Schaltungsaufbau ist identisch mit dem für den Hinterachsbremskreis, so daß sich eine Beschreibung desselben erübrigt.

Erfolgt nun bei Betätigung des Bremspedals ein von der elektronischen Regeleinrichtung ausgehendes Steuersignal für eine der Übertragungseinheiten, so kann jedes angesprochene Rad nach einer der bekannten Brems-"Philosophien" allein oder gemeinsam mit anderen Rädern abgebremst werden, wobei das ihm zugeordnete Wegeventil in Arbeitsstellung geht. Bei einem Defekt der elektronischen Regeleinrichtung und nach deren Abschaltung sind die Hauptbremskreise aller zu bremsenden Räder außer Betrieb und es kann achsenweise über die Nebenbremskreise II_{V} und II_{H} gebremst werden, die bei dieser Bremseinrichtung lediglich als Hilfsbremse fungieren.

Durch Anordnung der Druckluftvorratsbehälter und der Ventile nahe bei den zugeordneten Radbremszylindern ist ein schnelles Ansprechen der Bremsen gewährleistet. Lediglich bei Betätigung der Betriebsbremse nach Ausfall der Elektronik kann infolge der über das Fahrerhaus geführten langen Druckluftleitungen eine Verzögerung beim Aufbau der Bremskräfte, wie bisher, erfolgen.

In den Figuren 1a bis 1c sind nun noch diverse Ausgestaltungen des Wegeventils gemäß der Einzelheit WV in Figur 1 dargestellt.
Gemäß Figur 1a ist in die Vorsteuerleitung 7.2 zum 3/2-Wegeventil 7 noch ein Drosselrückschlagventil 7.3 - bestehend aus Rückschlagventil 7.3.1 mit parallel geschaltetem Drosselventil 7.3.2 - geschaltet, derart, daß Bremsmitteldruck ungehindert über die Vorsteuerleitung 7.2, das Rückschlagventil 7.3.1 und die Vorsteuerleitung 7.2.1 an das Wegeventil 7 gelangen und dieses in seine die Druckleitung 5.1 mit der Druckleitung 7.1 verbindende Arbeitsstellung schalten kann. Sollte im Rahmen einer ABS-Regelung der Bremsmitteldruck in der Vorsteuerleitung 7.2 für eine sehr kurze Zeitspanne unter den für das Schalten des Wegeventils 7 erforderlichen Vorsteuerdruck - im Ausführungsbeispiel beispielsweise 0,2 bar - absinken, wird einerseits durch das Rückschlagventil 7.3.1 ein Druckausgleich zwischen den Vorsteuerleitungen 7.2.1 und 7.2 verhindert und zum anderen durch das Drosselventil 7.3.2 bewirkt, daß der in der Vorsteuerleitung 7.2.1 herrschende Bremsmitteldruck (> 0,2 bar) sich innerhalb der sehr kurzen Zeitspanne (beispielsweise 0,3 Sekunden), in welcher in der Vorsteuerleitung 7.2 ein Bremsmitteldruck < 0,2 bar herrscht, nicht auf einen Wert < 0,2 bar abbauen kann und somit ein Umschalten des Wegeventils 7 während dieser kurzen Zeitspanne verhindert.

Gemäß Figur 1b ist in die Vorsteuerleitung 7.2 zum 3/2-Wegeventil 7 ein ebenfalls vom Bremsmitteldruck vorsteuerbares 2/2-Wegedrosselventil 7.4 geschaltet, derart, daß dieses bei in der Vorsteuerleitung 7.2 anstehendem Bremsmitteldruck über die Vorsteuerleitung 7.2.2 angesteuert in seine Arbeitsstellung schaltet, in welcher Bremsmitteldruck ungehindert über die Vorsteuerleitung 7.2, das Durchflußventil 7.4.1 und die Vorsteuerleitung 7.2.1 an das Wegeventil 7 gelangen und dieses in seine die Druckleitung 5.1 mit der Druckleitung 7.1 verbindende Arbeitsstellung schalten kann. Der zum Schalten des 2/2-Wegedrosselventils 7.4 erforderliche Bremsmitteldruck ist hierbei geringfügig größer gewählt - beispielsweise 0,3 bar - als der zum Schalten des Wegeventils 7 erforderliche Bremsmitteldruck - beispielsweise 0,2 bar -, um sicherzustellen, daß bei einem Druckabbau auf jeden Fall zuerst das 2/2-Wegedrosselventil 7.4 in seine Ruhestellung schaltet. Sollte nun auch hier im Rahmen einer ABS-Regelung der Bremsmitteldruck in den Vorsteuerleitungen 7.2 und 7.2.2 für eine kurze Zeitspanne unter den für das Schalten des 2/2-Wegedrosselventils 7.4 und weiters unter den für das Schalten des 3/2-Wegeventils 7 erforderlichen Vorsteuerdruck absinken, so schaltet bei einem Bremsmitteldruckabfall auf 0,3 bar das 2/2-Wegedrosselventil 7.4 in seine Ruhestellung, in welcher dann durch das Drosselventil 7.4.2 bewirkt wird, daß der in der Vorsteuerleitung 7.2.1 herrschende Bremsmitteldruck (> 0,2 bar) sich innerhalb der sehr kurzen Zeitspanne, in welcher in der Vorsteuerleitung 7.2 ein Bremsmitteldruckabfall auf < 0,2 bar vorliegt, nicht auf einen Wert < 0,2 bar abbauen kann und somit ein Umschalten des Wegeventils 7 während dieser kurzen Zeitspanne verhindert wird.

In Figur 1c ist das 2/2-Wegedrosselventil als Magnetventil 7.5 ausgebildet, über dessen Durchflußventil 7.5.1 (entsprechend der gezeigten Ruhestellung) ungehindert Bremsmitteldruck von der Vorsteuerleitung 7.2 über die Vorsteuerleitung 7.2.1 an das Wegeventil 7 gelangen und dieses in seine die Druckleitung 5.1 mit der Druckleitung 7.1 verbindende Arbeitsstellung schalten kann. Das Magnetventil 7.5 ist über eine elektrische Steuerleitung 7.5.3 mit der elektronischen Regeleinrichtung 4 verbunden und erhält von dieser nur dann ein Spannungssignal, wenn eine ABS-Regelung stattfindet. Das heißt, daß dann, wenn eine ABS-Regelung während des Bremsvorganges stattfindet, das Magnetventil 7.5 aktiviert wird und in seine Arbeitsstellung schaltet, in welcher es die Vorsteuerleitung 7.2.1 über das Drosselventil 7.5.2 mit der Vorsteuerleitung 7.2 verbindet. Sollte im Rahmen der ABS-Regeglung der Bremsmitteldruck in der Vorsteuerleitung 7.2 für eine sehr kurze Zeitspanne unter den für das Schalten des Wegeventils 7 erforderlichen Vorsteuerdruck absinken, so wird durch das Drosselventil 7.5.2 bewirkt, daß der in der Vorsteuerleitung 7.2.1 herrschende Bremsmitteldruck sich innerhalb der sehr kurzen Zeitspanne, in welcher in der Vorsteuerleitung 7.2 ein Bremsmitteldruck < 0,2 bar herrscht, nicht auf einen Wert < 0,2 bar abbauen kann und somit ein Umschalten des Wegeventils 7 während dieser kurzen Zeitspanne verhindert.

## Patentansprüche

1. Elektronisch geregelte Druckmittel-Bremseinrichtung für wenigstens einen Bremskreis eines Fahrzeuges,
mit einem dem Bremskreis zugeordneten Betriebsbremsventil (9) und einem elektrischen Sollwertgeber (8), die gemeinsam über ein Bremspedal (10) betätigbar sind,
und mit einem Radbremszylinder (3) für jedes in diesem Bremskreis zu bremsende Rad, der/die
mittels einer von einer elektronischen Regeleinrichtung (4) steuerbaren Elektromagnetventileinheit (5, 6) über einen Hauptbremskreis (I)
oder mittels des Betriebsbremsventils (9) über einen Nebenbremskreis (II)
und ein am Eingang zum Radbremszylinder (3) angeordnetes 2-Wegeventil (7) mit einer Druckmittelquelle (1) verbindbar ist/sind,
welches den Radbremszylinder (3) in seiner einen Endstellung mit dem Nebenbremskreis (II) und in seiner anderen Endstellung mit dem Hauptbremskreis (I) verbindet,
**dadurch** **gekennzeichnet**,
daß das 2-Wegeventil als ein vom über die Elektromagnetventileinheit (ÜE, 5, 6) in eine Vorsteuerleitung (7.2) eingesteuerten Bremsmitteldruck im Hauptbremskreis (I) vorsteuerbares 3/2-Wegeventil (WV, 7) ausgebildet ist,
welches in seiner Ruhestellung die Verbindung zwischen dem Radbremszylinder (3) und dem Nebenbremskreis (II)
und in seiner bei Überschreiten eines bestimmten Bremsmitteldruckes vorgesteuerten Arbeitsstellung die Verbindung zwischen dem Radbremszylinder (3) und dem Hauptbremskreis (I) herstellt.

2. Elektronisch geregelte Druckmittel-Bremseinrichtung nach Anspruch 1,
**dadurch gekennzeichnet,**
daß in die zum 3/2-Wegeventil (7) führende und von einer Druckleitung (5.1) im Hauptbremskreis (I) abgezweigte Vorsteuerleitung (7.2; 7.2.1) eine Ventileinheit (7.3; 7.4; 7.5) mit einem Drosselventil (7.3.2; 7.4.2; 7.5.2) geschaltet ist, durch welches ein Druckabbau am 3/2-Wegeventil (7; 7.2.1) auf dessen Vorsteuerdruck bei einem kurzzeitigen Druckgefälle zwischen demselben und der Druckleitung (5.1) verzögerbar ist.

3. Elektronisch geregelete Druckmittel-Bremseinrichtung nach Anspruch 2,
**dadurch gekennzeichnet,**
daß die Ventileinheit (7.3) als Rückschlagventil (7.3.1) mit parallel geschaltetem Drosselventil (7.3.2) ausgebildet ist.

4. Elektronisch geregelte Druckmittel-Bremseinrichtung nach Anspruch 2,
**dadurch** **gekennzeichnet**,
daß die Ventileinheit (7.4) als ein vom Bremsmitteldruck im Hauptbremskreis (I) vorsteuerbares 2/2-Wegedrosselventil (7.4.1; 7.4.2) ausgebildet ist.

5. Elektronisch geregelte Druckmittel-Bremseinrichtung nach Anspruch 2,
**dadurch** **gekennzeichnet**,
daß die Ventileinheit (7.5) als ein über eine elektrische Steuerleitung (7.5.3) von der elektronischen Regeleinrichtung (4) ansteuerbares 2/2-Wegedrosselmagnetventil (7.5.1; 7.5.2) ausgebildet ist.

## Claims

1. Electrically controlled pressure-medium brake-device at least for the brake-circuit of a vehicle, with service brake-valve (9) attached to the brake-circuit and an electical setting means (8), which can be operated by means of a wheel-brake cylinder (3) for each of the wheels to be braked in said brake-circuit, which can be connected to a pressure medium reservoir by means of a solenoid-operated pilot valve (5, 6) cotrolled by an electronic regulating-device (4), or by means of the service brake valve (9) via a secondary brake circuit (II) and a 2-road valve (7) disposed at the entry to the wheel brake cylinder (3), which links the wheel brake cylinder (3) in one of its end positions with the secondary brake circuit (II) and in its other end position with the master brake circuit (I), wherein the 2-road valve is developed as a pilottable 3/2-road valve (WV, 7) in the master brake circuit (I) and with brake-medium pressure introduced into a pilot circuit (7. 2) by means of the solenoid-operated pilot valve unit (ÜE, 5, 6), said 3/2 road valve in its idle position producing the linking of the wheel brake cylinder (3) and the secondary brake cylinder (II) and the linking of the wheel brake cylinder (3) and the master brake cylinder (I) when said 3/2-road valve is in its state of exceeding a certain pilotted operating brake-medium pressure.

2. Electronically control led pressure-medium brake-device in accordance with claim 1 wherein in the pilot circuit (7.2; 7.2.1) which leads to the 3/2-road valve (7) and which is branched off from a pressure pipe (5.1) in the master brake circuit (I) a pilot valve unit (7.3; 7.4; 7.5) is controlled by a restriction valve (7.3.2; 7.4.2; 7.5.2) by means of which a fall in pressure at the 3/2-road valve (7; 7.2.1) is checked in the pilot pressure of said 3/2-road valve in the case of a short-term pressure fall between said pilot pressure and the pressure pipe (5.1).

3. Electronically controlled pressure-medium brake-device in accordance with claim 2 wherein the pilot valve (7.3) is formed as a non-return valve (7.3.1) with a restriction valve (7.3.2) connected parallel to it.

4. Electronically control led pressure-medium brake-device in accordance with claim 2 wherein the pilot control valve (7.4) is developed as a 2/2-road restriction valve (7.4.1; 7.4.2) which can be pilotted from a brake-medium pressure in the master brake circuit (I).

5. Electronically controlled pressure-medium brake-device in accordance with claim 2 wherein the pilot valve unit (7.5) is developed as a 2/2-solenoid-operated road restriction valve (7.5.1; 7.5.2) which can be controlled by means of an electrical pilot circuit (7. 5. 3) of the electronic regulating-device (4).

## Revendications

1. Dispositif de freinage avec fluide sous pression régulé électroniquement, pour au moins un circuit de freinage d'un véhicule, comportant une soupape de fonctionnement en freinage (9), associée au circuit de freinage et un transducteur de valeur de consigne (8) électrique, susceptibles d'être actionnés conjointement par l'intermédiaire d'une pédale de frein (10), et avec un cylindre de frein de roue (3), pour chaque roue à freiner dans ce circuit de freinage, le ou les cylindre(s) de frein de roue (3) étant susceptible(s) d'être relié(s) à une source de pression (1), au moyen d'une unité à électrovanne (5,6) susceptible d'être commandée par un dispositif de réglage (4) électronique, par l'intermédiaire d'un circuit principal de freinage (I), ou, au moyen de la soupape de fonctionnement en freinage (9), par l'intermédiaire d'un circuit de freinage auxiliaire (II) et une soupape à deux voies (7) étant disposée à l'entrée du cylindre de frein de roue (3), la soupape de fonctionnement en freinage (9) reliant le cylindre de frein de roue (3) au circuit de freinage auxiliaire (II), dans une première position finale, et au circuit de freinage principal (I) dans son autre position finale, caractérisé en ce que la soupape à deux voies est réalisée sous forme d'une soupape à 3 voies/2 positions (WV, 7), susceptible d'être pilotée par l'intermédiaire de l'unité à électrovanne (Üe, 5, 6), par la pression du fluide sous pression dans le circuit de freinage principal (I), injectée dans une conduite de pilotage (7.2), pour assurer la commande, la soupape à 3 voies/2 positions (WV,7) établissant, dans sa position de repos, la liaison entre le cylindre de frein de roue (3) et le circuit de freinage auxiliaire (II) et établissant, dans sa position de travail, pilotée en cas de dépassement d'une pression déterminée du fluide sous pression, la liaison entre le cylindre de frein de roue (3) et le circuit de freinage principal (I).

2. Dispositif de freinage avec fluide sous pression régulé électroniquement selon la revendication 1, caractérisé en ce que, dans la conduite de pilotage (7.2;7.2.1) qui mène à la soupape à 3 voies/2 positions (7) et est dérivée d'une conduite de pression (5.1) située dans le circuit de freinage principal (I) est mise en circuit une unité de soupape (7.3;7.4;7.5), équipée d'une soupape d'étranglement (7.3.2;7.4.2;7.5.2), au moyen de laquelle la chute de la pression à la soupape à 3 voies/2 positions (7;7.2.1) à sa valeur de pilotage peut être retardée dans le cas d'une brève chute de pression, entre celle-ci et la conduite de pression (5.1).

3. Dispositif de freinage avec fluide sous pression régulé électroniquement selon la revendication 2, caractérisé en ce que l'unité de soupape (7.3) est réalisée sous forme de clapet anti-retour (7.3.1) équipé d'une soupape d'étranglement (7.3.2) mise en circuit en parallèle.

4. Dispositif de freinage avec fluide sous pression régulé électroniquement selon la revendication 2, caractérisé en ce que l'unité de soupape (7.4) est réalisée sous forme d'une soupape à 2 voies/2 positions à étranglement (7.4.1;7.4.2) susceptible d'être pilotée par la pression du fluide sous pression dans le circuit de freinage principal (I).

5. Dispositif de freinage avec fluide sous pression régulé électroniquement selon la revendication 2, caractérisé en ce que l'unité de soupape (7.5) est réalisée sous forme d'une électrovanne à 2 voies/2 positions à étranglement (7.5.1;7.5.2) susceptible d'être commandée par le dispositif de réglage (4), par l'intermédiaire d'une ligne de commande électrique (7.5.3).
